# EUROPÄISCHE PATENTSCHRIFT

(11) **EP 4 619 261 B1**
(45) Veröffentlichungstag und Bekanntmachung des Hinweises auf die Patenterteilung: **13.05.2026**
(21) Anmeldenummer: 24707527.8
(22) Anmeldetag: 26.02.2024
(51) Int. Cl.: B60K 1/04, B62D 25/20

(54) **UNTERBODENSCHUTZ FÜR KRAFTFAHRZEUGE, BATTERIEGEHÄUSE FÜR EINE TRAKTIONSBATTERIE, TRAKTIONSBATTERIE FÜR KRAFTFAHRZEUGE, KRAFTFAHRZEUG MIT UNTERBODENSCHUTZ**
UNDERBODY PROTECTION MEANS FOR MOTOR VEHICLES, BATTERY HOUSING FOR A TRACTION BATTERY, TRACTION BATTERY FOR MOTOR VEHICLES, AND MOTOR VEHICLE HAVING AN UNDERBODY PROTECTION MEANS
MOYEN DE PROTECTION DE SOUBASSEMENT POUR VÉHICULES AUTOMOBILES, LOGEMENT DE BATTERIE POUR BATTERIE DE TRACTION, BATTERIE DE TRACTION POUR VÉHICULES AUTOMOBILES, ET VÉHICULE AUTOMOBILE DOTÉ D'UN MOYEN DE PROTECTION DE SOUBASSEMENT

(30) Priorität: 27.02.2023 DE 102023104736
(43) Veröffentlichungstag der Anmeldung: 24.09.2025
(60) Teilanmeldung: 25219200.0
(73) Patentinhaber: Kautex Textron GmbH & Co. KG, 53229 Bonn (DE)
(72) Erfinder: HEIDRICH, Daniel, 41569 Rommerskirchen (DE)
(74) Vertreter: Richly & Ritschel Patentanwälte PartG mbB
(86) Internationale Anmeldenummer: PCT/EP2024/054770
(87) Internationale Veröffentlichungsnummer: WO 2024/179966

(56) Entgegenhaltungen:
- WO-A1-2020/224954
- WO-A1-2021/185632
- DE-A1- 102014 004 853
- DE-A1- 102019 205 422
- DE-B3- 102021 114 542

## Beschreibung

Die vorliegende Erfindung betrifft einen Unterbodenschutz für Kraftfahrzeuge, insbesondere für Elektrokraftfahrzeuge. Ferner betrifft die vorliegende Erfindung ein Batteriegehäuse für eine Traktionsbatterie. Weiterhin betrifft die vorliegende Erfindung eine Traktionsbatterie für ein Kraftfahrzeug. Schlussendlich betrifft die vorliegende Erfindung ein Kraftfahrzeug, insbesondere ein Elektrokraftfahrzeug mit einem Unterbodenschutz.

Aus dem Stand der Technik (DE102021114542) sind verschiedene Arten von Unterbodenschutzsystemen bekannt. Vorwiegend werden schwere Stahlplatten oder Stahlschweißbaugruppen als Unterbodenschutz verwendet, um die hohe Intrusionskraft und Aufprallenergie beim dynamischen Aufsetzen von Kraftahrzeugen auf Hindernisse aufzunehmen. Solche Unterbodenschutzsysteme erhöhen das Fahrzeuggesamtgewicht. Zudem weist ein Unterbodenschutz aus Stahl eine erhöhte Gefahr gegenüber Korrosion auf. Schließlich weist ein Unterbodenschutz aus Stahl eine geringe chemische Beständigkeit gegenüber Bestandteilen von Batteriezellen und/oder Batteriemodulen, insbesondere gegenüber Elektrolyten, auf.

Der Erfindung liegt die Aufgabe zugrunde, einen Unterbodenschutz bereitzustellen, der eine hohe Steifigkeit und Energieaufnahmefähigkeit bei gleichzeitig geringem Gewicht aufweist und darüber hinaus eine erhöhte Beständigkeit gegenüber Korrosion und chemischen Belastungen aufweist.

Die der vorliegenden Erfindung zugrundeliegende Aufgabe wird durch einen Unterbodenschutz mit den Merkmalen des Anspruchs 1 gelöst. Vorteilhafte Ausgestaltungen des Unterbodenschutzes sind in den von Anspruch 1 abhängigen Ansprüchen beschrieben.

Im Genaueren wird die der vorliegenden Erfindung zugrundeliegende Aufgabe durch einen Unterbodenschutz für ein Kraftfahrzeug gelöst, der zumindest eine Kunststofflage, zumindest ein Schutzelement und zumindest eine Schaumschicht aufweist, wobei das Schutzelement mit der Kunststofflage verbunden ist und die Schaumschicht mit einer Innenfläche des Unterbodenschutzes verbunden ist.

Der erfindungsgemäße Unterbodenschutz weist den Vorteil auf, dass die Schutzwirkung des Unterbodenschutzes gegen eine mechanische Einwirkung durch beispielsweise einen Aufprall erhöht und gleichzeitig das Gewicht des Unterbodenschutzes vermindert ist. Ferner weist der erfindungsgemäße Unterbodenschutz eine verbesserte Korrosionsbeständigkeit auf. Weiterhin weist der erfindungsgemäße Unterbodenschutz den Vorteil auf, dass dieser bei engen Bauraumverhältnissen insbesondere in vertikaler Richtung eines Kraftfahrzeugs ein vergrößertes Aufnahmevolumen aufweist. Wenn beispielsweise der erfindungsgemäße Unterbodenschutz als Batteriegehäuseschale einer Traktionsbatterie genutzt wird, kann das Batteriegehäuse besonders flach bauen.

Die Innenfläche des Unterbodenschutzes ist die Fläche, die einem Aufnahmevolumen des Unterbodenschutzes zugewandt ist.

Die Kunststofflage weist vorzugsweise eine Dickenerstreckung in einem Bereich zwischen 1.5 mm und 5 mm, weiter vorzugsweise in einem Bereich zwischen 2 mm und 3 mm auf. Wiederum vorzugsweise weist die Kunststofflage eine Dickenerstreckung von 2.5 mm auf.

Die Kunststofflage ist vorzugsweise aus einem thermoplastischen und/oder duroplastischen Kunststoff gebildet.

Die Kunststofflage kann zumindest abschnittsweise als faserverstärkte Kunststofflage ausgebildet sein. Dadurch kann die Biegesteifigkeit des Unterbodenschutzes verbessert werden.

Die Kunststofflage kann Kurzfasern und/oder Langfasern und/oder Endlosfasern aufweisen. Dadurch kann die Biegesteifigkeit des Unterbodenschutzes nochmals verbessert werden.

Die Fasern der Kunststofflage können als Glasfasern und/oder Karbonfasern und/oder Aramidfasern ausgebildet sein.

Die Kunststofflage kann mittels Pressverfahren wie beispielsweise Langfaser-Thermoplast-Fließpressen, Glasmatten-Thermoplast-Formpressen oder Spritzgießen werkzeugfallend hergestellt werden.

Das Schutzelement weist vorzugsweise eine Dickenerstreckung in einem Bereich zwischen 0.5 mm und 5 mm, weiter vorzugsweise in einem Bereich zwischen 1 mm und 4 mm auf, weiter vorzugsweise in einem Bereich zwischen 1.5 mm und 3 mm auf. Wiederum vorzugsweise weist das Schutzelement eine Dickenerstreckung im Bereich von 0.8 mm und 1 mm auf.

Vorzugsweise ist das Schutzelement von der Kunststofflage lösbar, so dass im Falle einer Beschädigung des Schutzelements dieses von der Kunststofflage demontiert und durch ein neues Schutzelement ausgetauscht werden kann.

Vorzugsweise ist das zumindest eine Schutzelement mit der zumindest einen Kunststofflage verschweißt und/oder verklebt und/oder verschraubt.

Die Schaumschicht kann als PUR-Schaum ausgebildet sein. Die Schaumschicht kann als EPP-Schaum ausgebildet sein. Die Schaumschicht kann als separat hergestelltes Bauteil ausgebildet sein.

Vorzugsweise weist die Schaumschicht eine Dichte in einem Bereich zwischen 60 g/l und 180 g/l, weiter vorzugsweise in einem Bereich zwischen 100 g/l und 150 g/l auf.

Vorzugsweise ist der Unterbodenschutz derart ausgebildet, dass zumindest ein Schutzelement an einer Außenseite des Unterbodenschutzes angeordnet ist und zumindest teilweise eine Außenfläche des Unterbodenschutzes bildet. Die zumindest eine Kunststofflage ist vorzugsweise an einer Innenseite des Unterbodenschutzes angeordnet und bildet zumindest teilweise die Innenfläche des Unterbodenschutzes und die Schaumschicht ist vorzugsweise zumindest abschnittsweise mit der Kunststofflage verbunden.

Der entsprechend ausgebildete Unterbodenschutz weist den Vorteil auf, dass aufgrund der Anordnung des Schutzelements an der Außenfläche des Unterbodenschutzes etwaige Beschädigungen des Unterbodenschutzes leicht erkennbar sind, so dass ein Austausch des Unterbodenschutzes bzw. des Schutzelements vereinfacht ermöglicht ist.

Die Außenseite des Unterbodenschutzes ist die Seite, die dem Bauteil, an dem der Unterbodenschutz angebracht wird (z.B. Traktionsbatterie), abgewandt ist. Wenn beispielsweise der Unterbodenschutz als Batteriegehäuseschale ausgebildet ist, ist die Außenseite des Unterbodenschutzes die Seite, die einem Aufnahmevolumen des Unterbodenschutzes abgewandt ist.

Die Außenfläche des Unterbodenschutzes ist die Fläche, die einem Aufnahmevolumen des Unterbodenschutzes abgewandt ist.

Die Innenseite des Unterbodenschutzes ist die Seite, die dem Bauteil, an dem der Unterbodenschutz angebracht wird (z.B. Traktionsbatterie), zugewandt ist. Wenn beispielsweise der Unterbodenschutz als Batteriegehäuseschale ausgebildet ist, ist die Innenseite des Unterbodenschutzes die Seite, die einem Aufnahmevolumen des Unterbodenschutzes zugewandt ist.

Die Schaumschicht kann zumindest abschnittsweise mit der Kunststofflage verklebt und/oder verschweißt sein.

Vorzugsweise weist der Unterbodenschutz zumindest zwei Kunststofflagen auf, wobei eine der Kunststofflagen zumindest teilweise die Innenfläche des Unterbodenschutzes bildet. Das Schutzelement ist vorzugsweise sandwichartig zwischen den zwei Kunststofflagen angeordnet und die Schaumschicht ist vorzugsweise zumindest abschnittsweise mit der Kunststofflage verbunden, die zumindest teilweise die Innenfläche des Unterbodenschutzes bildet.

Ein derart ausgebildeter Unterbodenschutz weist eine verbesserte Korrosionsbeständigkeit auf.

Eine der Kunststofflagen ist vorzugsweise an einer Außenseite des Unterbodenschutzes angeordnet und kann zumindest teilweise die Außenfläche des Unterbodenschutzes bilden. Dadurch weist der Unterbodenschutz eine nochmals verbesserte Korrosionsbeständigkeit auf.

Vorzugsweise weist der Unterbodenschutz zumindest zwei Rippen auf, die in die Schaumschicht ragen.

Der entsprechend ausgebildete Unterbodenschutz weist eine nochmals erhöhte Stabilität bei einer mechanischen Einwirkung auf, die beispielsweise durch einen Aufprall durch ein dynamisches Aufsetzen eines Kraftfahrzeugs auf einen Untergrund resultiert.

Vorzugsweise weist die Schaumschicht eine Dickenerstreckung auf, die größer ist als die Höhenerstreckung der zumindest zwei Rippen. Bei einer entsprechenden Ausbildung befinden sich die jeweiligen freien Enden der Rippen innerhalb der Schaumschicht. Dadurch kann zumindest eine Batteriezelle und/oder zumindest ein Batteriemodul stabiler oberhalb der Schaumschicht angeordnet werden, wenn der Unterbodenschutz als Batteriegehäuseschale ausgebildet ist.

Die Rippen können in einem regelmäßigen Muster angeordnet sein. Dadurch wird die Biegesteifigkeit des Unterbodenschutzes verbessert.

Eine erste Untermenge der Rippen kann beispielsweise parallel zueinander ausgerichtet sein und eine zweite Untermenge der Rippen kann zu der ersten Untermenge der Rippen gekreuzt ausgerichtet angeordnet sein.

Die Rippen können einen Abstand untereinander in einem Bereich zwischen 30 mm bis 400 mm, vorzugsweise in einem Bereich von 40 mm bis 60 mm aufweisen.

Die Rippen können eine Wandstärke in einem Bereich von 1 mm bis 5 mm, vorzugsweise in einem Bereich von 2 mm bis 4 mm aufweisen.

Die Rippen weisen vorzugsweise eine Höhenerstreckung in einem Bereich zwischen 4 mm und 30 mm, weiter vorzugsweise in einem Bereich von 8 mm bis 15 mm auf.

Vorzugsweise ist zumindest ein Teil der Rippen monolithisch mit der Kunststofflage ausgebildet, die an der Innenseite des Unterbodenschutzes angeordnet sind.

Ein derart ausgebildeter Unterbodenschutz weist den Vorteil auf, dass dieser in einem Fertigungsschritt hergestellt werden kann.

Zwei monolithisch miteinander verbundene Bauteile sind aus einem zusammenhängenden Stück gefertigt. Insbesondere sind zwei monolithisch miteinander verbundene Teile fugenlos miteinander verbunden.

Vorzugsweise ist der Unterbodenschutz derart ausgebildet, dass zumindest ein Schutzelement an einer Innenseite des Unterbodenschutzes angeordnet ist und zumindest teilweise die Innenfläche des Unterbodenschutzes bildet. Die zumindest eine Kunststofflage ist vorzugsweise an einer Außenseite des Unterbodenschutzes angeordnet und bildet zumindest teilweise eine Außenfläche des Unterbodenschutzes und die Schaumschicht ist zumindest abschnittsweise mit dem Schutzelement verbunden.

Der entsprechend ausgebildete Unterbodenschutz weist den Vorteil auf, dass das Schutzelement beispielsweise vor Umwelteinflüssen verbessert geschützt ist und somit der Unterbodenschutz eine verbesserte Korrosionsbeständigkeit aufweist.

Die Schaumschicht kann mit dem zumindest einen Schutzelement zumindest abschnittsweise verschweißt und/oder verklebt sein.

Das zumindest eine Schutzelement, welches zumindest teilweise die Innenfläche des Unterbodenschutzes bildet, kann eine Mehrzahl von Durchgangsöffnungen aufweisen, durch die Rippen bildendes Material der Kunststofflage hindurchragt. Dadurch kann ein verbesserter Formschluss zwischen dem zumindest einen Schutzelement und der Kunststofflage erreicht werden. Der entsprechend ausgebildete Unterbodenschutz weist eine verbesserte Stabilität auf und ist darüber hinaus besonders einfach herstellbar. Denn die Position der auf der den Rippen zugewandten Innenseite angeordneten Schutzelements ist dadurch fixiert, dass die Rippen durch die Durchgangsöffnungen hindurchragen. Die Rippen können beispielsweise durch Hindurchdrücken des Materials der Kunststofflage durch die Durchgangsöffnungen des Schutzelements gebildet werden.

Vorzugsweise weist der Unterbodenschutz zumindest zwei Schutzelemente auf, wobei eines der Schutzelemente zumindest teilweise die Innenfläche des Unterbodenschutzes bildet. Die Kunststofflage ist vorzugsweise sandwichartig zwischen den zwei Schutzelementen angeordnet und die Schaumschicht ist zumindest abschnittsweise mit dem Schutzelement verbunden, das zumindest teilweise die Innenfläche des Unterbodenschutzes bildet.

Ein derart ausgebildeter Unterbodenschutz weist eine verbesserte Biegesteifigkeit auf. Ferner weist der entsprechend ausgebildete Unterbodenschutz eine verminderte Neigung zum Verzug (Deformierung) bei Temperaturveränderung auf.

Eines der Schutzelemente ist vorzugsweise an einer Außenseite des Unterbodenschutzes angeordnet und kann zumindest teilweise die Außenfläche des Unterbodenschutzes bilden. Dadurch weist der Unterbodenschutz eine nochmals verbesserte Biegesteifigkeit auf.

Vorzugsweise ist das zumindest eine Schutzelement als Metallplatte oder als Organoblech oder als Kunststoffelement ausgebildet.

Unter Organoblechen sind Faser-Matrix-Halbzeuge zu verstehen. Diese bestehen aus einem Fasergewebe oder einem Fasergelege, die in eine thermoplastische Kunststoffmatrix eingebettet sind. Dadurch kann die Warmumformbarkeit verbessert werden und dadurch die Fertigungszeiten verkürzt werden. Zudem kann die Biegesteifigkeit des Unterbodenschutzes verbessert werden.

Wenn das Schutzelement als Organoblech ausgebildet ist, kann dieses Langfasern und/oder Endlosfasern aufweisen. Dadurch kann die Biegesteifigkeit des Unterbodenschutzes nochmals verbessert werden.

Die Fasern des Organobleches können als Glasfasern und/oder Karbonfasern und/oder Aramidfasern ausgebildet sein.

Das Organoblech kann mittels Pressverfahren wie beispielsweise Langfaser-Thermoplast-Fließpressen oder Glasmatten-Thermoplast-Formpressen werkzeugfallend hergestellt werden.

Das Organoblech kann ein PA6 oder ein PP aufweisen. Das Organoblech kann den gleichen Kunststoff aufweisen, wie die zumindest eine Kunststofflage. Dadurch kann das Organoblech verbessert mit der Kunststofflage verbunden werden, insbesondere verschweißt werden.

Wenn der Unterbodenschutz mehr als ein Schutzelement aufweist, kann ein Schutzelement als Metallplatte und ein weiteres Schutzelement als Organoblech ausgebildet sein.

Wenn das Schutzelement als Metallplatte ausgebildet ist, kann die Metalplatte beispielsweise aus Aluminium oder aus Stahl hergestellt sein.

Vorzugsweise weist der Unterbodenschutz einen randseitig angeordneten Verbindungsflansch auf.

Vorzugsweise ist das Schutzelement mit der Kunststofflage mittels einer Mehrzahl von Schrauben verbunden, die in den Verbindungsflansch eingeschraubt sind.

Die Schrauben sind vorzugsweise als gewindeformende Schrauben ausgebildet, die bei Eindrehen in die Kunststofflage ein Gewinde in dieser ausformen.

Vorzugsweise ist das Schutzelement mittels zehn bis achtzig Schrauben mit der Kunststofflage verbunden.

Vorzugsweise ist zwischen dem Schutzelement und der Kunststofflage ein Dichtstoff angeordnet, der beispielsweise ein einkomponentiger oder zweikomponentiger Polyurethan-Klebstoff oder ein silikonbasierter Klebstoff oder ein Klebsbstoff auf Basis silanmodifizierter Polymere sein kann.

Vorzugsweise ist zwischen dem Schutzelement und der Kunststofflage ein Klebeband und/oder ein Schaumtape und/oder ein Transfertape jeweils vorzugsweise auf Acrylbasis angeordnet.

Vorzugsweise weist der Verbindungsflansch eine Breitenerstreckung zwischen 8 mm und 40 mm, bevorzugt zwischen 10 mm und 18 mm, auf.

Vorzugsweise ist zumindest ein Schutzelement mit zumindest einer Kunststofflage stoffschlüssig verbunden.

Eine stoffschlüssige Verbindung kann beispielsweise durch Verkleben der Kunststofflage mit dem Schutzelement erreicht werden.

Vorzugsweise ist auf dem zumindest einen Schutzelement eine Haftvermittlerschicht aufgebracht.

Durch die Haftvermittlerschicht kann eine verbesserte Verbindung, insbesondere eine verbesserte stoffschlüssige Verbindung erreicht werden.

Die Haftvermittlerschicht kann als hitzeaktivierbare Klebeschicht ausgebildet sein, vorzugsweise in Form einer Folie, eines Lacks und/oder einer Pulverlackbeschichtung. Die Pulverlackbeschichtung kann auf thermoplastischer oder duroplastischer Basis ausgebildet sein. Dadurch kann eine nochmals verbesserte stoffschlüssige Verbindung zwischen dem zumindest einen Schutzelement und der zumindest einen Kunststofflage erreicht werden.

Die Haftvermittlerschicht kann eine Schichtdicke in einem Bereich von 0,02 mm bis 3 mm aufweisen, vorzugsweise in einem Bereich von 0,03 mm bis 1 mm, weiter vorzugsweise in einem Bereich von 0,05 mm bis 0,3 mm.

Vorzugsweise ist das zumindest eine Schutzelement mit der zumindest einen Kunststofflage verschweißt.

Weiter vorzugsweise ist das zumindest eine Schutzelement mikrostrukturiert. Die Mikrooberflächenstruktur des zumindest einen Schutzelements ist beispielsweise mittels eines Laser-Mikrostrukturierungsverfahrens und/oder mittels Sandstrahlen oder Korundstrahlen und/oder mittels eines Ätzverfahrens erzeugt. Dadurch kann ein Mikroformschluss zwischen dem zumindest einen Schutzelement und der zumindest einen Kunststofflage erreicht werden.

Unter einem Mikroformschluss im Sinne der Erfindung wird ein Formschluss zwischen zwei Bauteilen verstanden, wobei ein Bauteil an einer Vielzahl von Stellen zumindest teilweise von dem anderen Bauteil hintergriffen wird. Dadurch kann ein verbesserter Formschluss mit einer erhöhten Verbindungskraft erreicht werden. Außerdem können dadurch zwei Bauteile unterschiedlicher Materialien wie beispielsweise Kunststoff und Metall verbessert miteinander verbunden werden.

Vorzugsweise ist der Unterbodenschutz schalenförmig ausgebildet und begrenzt zumindest teilweise ein Aufnahmevolumen, das zur Aufnahme von Batteriezellen und/oder Batteriemodulen ausgebildet ist.

Der entsprechend ausgebildete Unterbodenschutz weist den Vorteil auf, dass dieser mehrere Funktionen miteinander kombiniert, nämlich die Funktion der Aufnahme von Batteriezellen und/oder Batteriemodulen und die Funktion des Schutzes der Batteriezellen und/oder Batteriemodule vor Beschädigung durch Aufsetzen eines Kraftfahrzeugs mit einer Traktionsbatterie, die den beschriebenen Unterbodenschutz aufweist, auf einem Untergrund.

Vorzugsweise ist die Schaumschicht in dem Aufnahmevolumen des schalenförmigen Unterbodenschutzes angeordnet. Dadurch kann eine hohe Intrusionskraft und Aufprallenergie aufgenommen werden. Wenn der Unterbodenschutz beispielsweise als Batteriegehäuseschale ausgebildet ist, kann dadurch zumindest eine Batteriezelle und/oder zumindest ein Batteriemodul besser geschützt werden.

Die der vorliegenden Erfindung zugrundeliegende Aufgabe wird ferner durch ein Batteriegehäuse zur Aufnahme von Batteriezellen und/oder Batteriemodulen gelöst, wobei das Batteriegehäuse eine Batteriegehäuseschale aufweist, die als ein oben beschriebener Unterbodenschutz gemäß einer der beschriebenen Ausführungsformen ausgebildet ist.

Die der vorliegenden Erfindung zugrundeliegende Aufgabe wird ferner durch eine Traktionsbatterie für ein Kraftfahrzeug gelöst, wobei die Traktionsbatterie zumindest eine Batteriezelle und/oder zumindest ein Batteriemodul und ein oben beschriebenes Batteriegehäuse aufweist, wobei die zumindest eine Batteriezelle und/oder das zumindest eine Batteriemodul in dem Batteriegehäuse angeordnet ist/sind.

Vorzugsweise ist die Traktionsbatterie derart ausgebildet, dass die zumindest eine Batteriezelle und/oder das zumindest eine Batteriemodul auf der Schaumschicht angeordnet ist/sind.

Bei einer derart ausgebildeten Traktionsbatterie kann die Lastverteilung bei einem vertikalen Impakt auf die auf der Schaumschicht angeordnete zumindest eine Batteriezelle und/oder das zumindest eine Batteriemodul verbessert werden und gleichzeitig die Energie des Impakts durch die Schaumschicht absorbiert werden.

Die der vorliegenden Erfindung zugrundeliegende Aufgabe wird ferner durch ein Kraftfahrzeug, insbesondere Elektrokraftfahrzeug mit einem Unterbodenschutz gelöst, der nach einer der oben beschriebenen Ausführungsformen ausgebildet ist, und der an einem Unterboden des Kraftfahrzeugs, insbesondere an einer Traktionsbatterie des Kraftfahrzeugs befestigt ist. Alternativ wird die der vorliegenden Erfindung zugrundeliegende Aufgabe durch ein Kraftfahrzeug, insbesondere ein Elektrofahrzeug mit einer Traktionsbatterie, die nach einer der oben beschriebenen Ausführungsformen ausgebildet ist, gelöst.

Weitere Vorteile, Einzelheiten und Merkmale der Erfindung ergeben sich nachfolgend aus den erläuterten Ausführungsbeispielen.

Dabei zeigen im Einzelnen:
- Figur 1:: eine schematische Schnittdarstellung eines erfindungsgemäßen Unterbodenschutzes gemäß einer ersten Ausführungsform;
- Figur 2:: eine schematische Schnittdarstellung eines erfindungsgemäßen Unterbodenschutzes gemäß einer zweiten Ausführungsform;
- Figur 3:: eine schematische Schnittdarstellung eines erfindungsgemäßen Unterbodenschutzes gemäß einer dritten Ausführungsform;
- Figur 4:: eine schematische Schnittdarstellung einer erfindungsgemäßen Traktionsbatterie aufweisend einen Unterbodenschutz gemäß einer vierten Ausführungsform; und
- Figur 5:: eine schematische Schnittdarstellung einer erfindungsgemäßen Traktionsbatterie aufweisend einen Unterbodenschutz gemäß einer fünften Ausführungsform.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

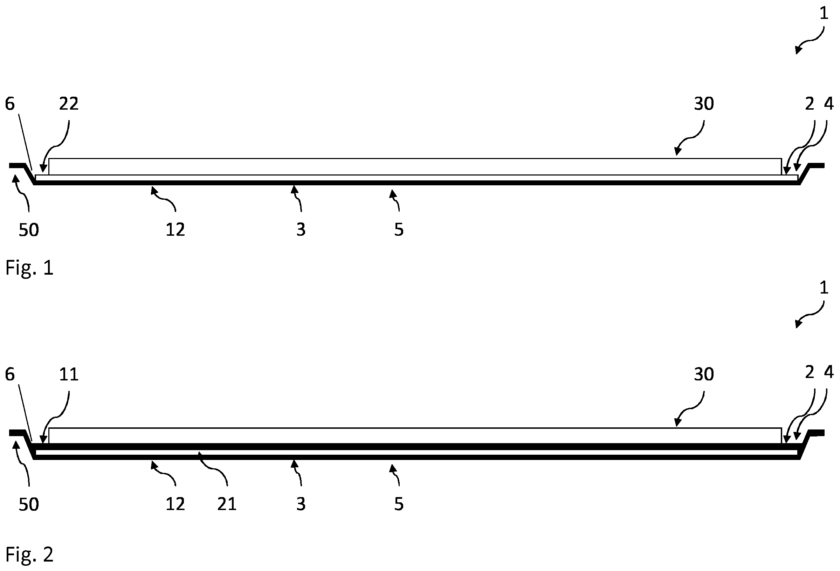

Figur 1 zeigt eine erste Ausführungsform eines erfindungsgemäßen Unterbodenschutzes 1 für ein Kraftfahrzeug in einer schematischen Schnittdarstellung. Der Unterbodenschutz 1 weist eine Kunststofflage 12, ein Schutzelement 22 und eine Schaumschicht 30 auf. Das Schutzelement 22 ist mit der Kunststofflage 12 verbunden und die Schaumschicht 30 ist mit einer Innenfläche 2 des Unterbodenschutzes 1 verbunden.

Das Schutzelement 22 ist an einer Innenseite 4 des Unterbodenschutzes 1 angeordnet und bildet zumindest teilweise die Innenfläche 2 des Unterbodenschutzes 1. Die Kunststofflage 12 ist an einer Außenseite 5 des Unterbodenschutzes 1 angeordnet und bildet zumindest teilweise eine Außenfläche 3 des Unterbodenschutzes. Die Schaumschicht 30 ist zumindest abschnittsweise mit dem Schutzelement 22 verbunden.

Der Unterbodenschutz 1 weist zudem einen randseitig angeordneten Verbindungsflansch 50 auf. Der Verbindungsflansch 50 kann eine Breitenerstreckung zwischen 8 mm und 40 mm aufweisen.

Der Unterbodenschutz 1 ist ferner schalenförmig ausgebildet und begrenzt zumindest teilweise eine Aufnahmevolumen 6, das zur Aufnahme von Batteriezellen 120 und/oder Batteriemodulen ausgebildet ist.

Das zumindest eine Schutzelement 22 kann als Metallplatte oder als Organoblech ausgebildet sein. Das zumindest eine Schutzelement 22 kann mit der Kunststofflage 12 stoffschlüssig verbunden sein.

Figur 2 zeigt eine zweite Ausführungsform eines erfindungsgemäßen Unterbodenschutzes 1 für ein Kraftfahrzeug in einer schematischen Schnittdarstellung. Der Unterbodenschutz 1 weist zwei Kunststofflagen 11, 12 auf, wobei eine der Kunststofflagen 11 zumindest teilweise die Innenfläche 2 des Unterbodenschutzes 1 bildet. Das Schutzelement 21 ist sandwichartig zwischen den zwei Kunststofflagen 11, 12 angeordnet und die Schaumschicht 30 ist zumindest abschnittsweise mit der Kunststofflage 11 verbunden, die zumindest teilweise die Innenfläche 2 des Unterbodenschutzes 1 bildet. Zudem ist eine der Kunststofflagen 12 an einer Außenseite 5 des Unterbodenschutzes 1 angeordnet und bildet zumindest teilweise eine Außenfläche 3 des Unterbodenschutzes.

Das zumindest eine Schutzelement 21 kann als Metallplatte oder als Organoblech ausgebildet sein. Das zumindest eine Schutzelement 21 kann mit der Kunststofflage 11 und/oder mit der Kunststofflage 12 stoffschlüssig verbunden sein.

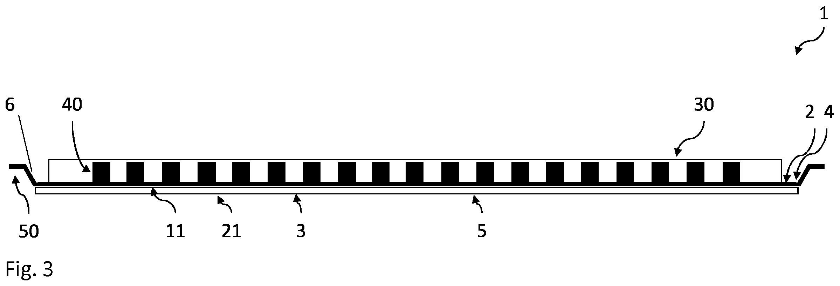

Figur 3 zeigt eine dritte Ausführungsform eines erfindungsgemäßen Unterbodenschutzes 1 für ein Kraftfahrzeug in einer schematischen Schnittdarstellung. Der Unterbodenschutz 1 weist ein Schutzelement 21 auf, dass an einer Außenseite 5 des Unterbodenschutzes 1 angeordnet ist und zumindest teilweise eine Außenfläche 3 des Unterbodenschutzes 1 bildet. Die Kunststofflage 11 ist an einer Innenseite 4 des Unterbodenschutzes 1 angeordnet und bildet zumindest teilweise die Innenfläche 2 des Unterbodenschutzes 1 und die Schaumschicht 30 ist zumindest abschnittsweise mit der Kunststofflage 11 verbunden.

Der Unterbodenschutz 1 weist zudem zumindest zwei Rippen 40 auf, die in die Schaumschicht 30 ragen. Zumindest ein Teil der Rippen 40 kann mit der Kunststofflage 11, die an der Innenseite 4 des Unterbodenschutzes 1 angeordnet ist, monolithisch ausgebildet sein.

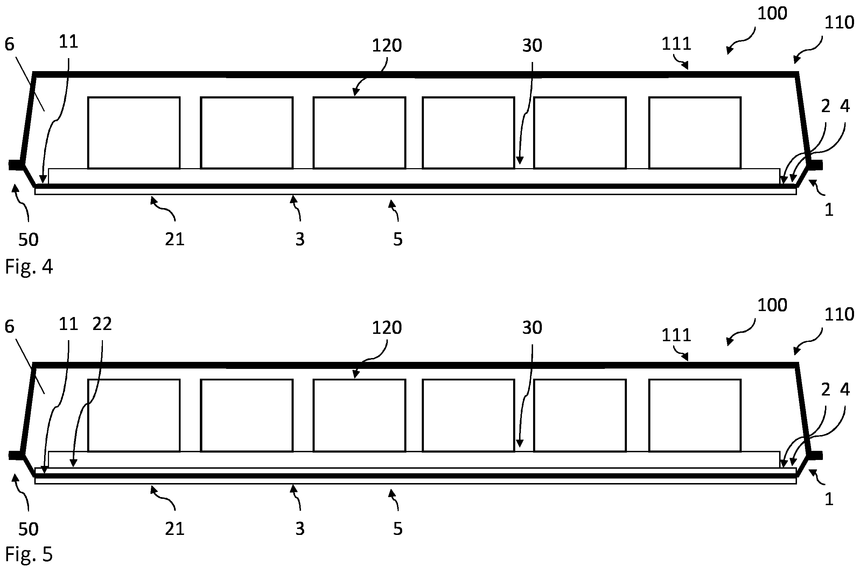

Figur 4 zeigt eine erfindungsgemäße Traktionsbatterie 100 für ein Kraftfahrzeug in einer schematischen Schnittdarstellung. Die Traktionsbatterie 100 weist zumindest eine Batteriezelle 120 und ein Batteriegehäuse 110 auf, wobei die zumindest eine Batteriezelle 120 in dem Batteriegehäuse 110 angeordnet ist.

Das Batteriegehäuse 110 weist einen Batteriegehäusedeckel 111 und einen als Batteriegehäuseschale 1 ausgebildeten Unterbodenschutz 1 gemäß einer vierten Ausführungsform auf. Der Unterbodenschutz 1 weist eine Kunststofflage 11, ein Schutzelement 21 und eine Schaumschicht 30 auf. Das Schutzelement 21 ist mit der Kunststofflage 11 verbunden und die Schaumschicht 30 ist mit einer Innenfläche 2 des Unterbodenschutzes 1 verbunden.

Das Schutzelement 21 ist an einer Außenseite 5 des Unterbodenschutzes 1 angeordnet und bildet zumindest teilweise eine Außenfläche 3 des Unterbodenschutzes 1. Die Kunststofflage 11 ist an einer Innenseite 4 des Unterbodenschutzes 1 angeordnet und bildet zumindest teilweise die Innenfläche 2 des Unterbodenschutzes 1 und die Schaumschicht 30 ist zumindest abschnittsweise mit der Kunststofflage 11 verbunden.

Der Unterbodenschutz 1 weist zudem einen randseitig angeordneten Verbindungsflansch 50 auf. Der Unterbodenschutz 1 ist schalenförmig ausgebildet und begrenzt zumindest teilweise ein Aufnahmevolumen 6, das zur Aufnahme von Batteriezellen 120 und/oder Batteriemodulen ausgebildet ist.

Der Batteriegehäusedeckel 111 ist mit dem Unterbodenschutz 1 durch den Verbindungsflansch 50 verbunden und begrenzt das Aufnahmevolumen 6.

Die zumindest eine Batteriezelle 120 ist auf der Schaumschicht 30 angeordnet. Die zumindest eine Batteriezelle 120 ist in dem Aufnahmevolumen 6 angeordnet.

Figur 5 zeigt eine erfindungsgemäße Traktionsbatterie 100 für ein Kraftfahrzeug in einer schematischen Schnittdarstellung. Die Traktionsbatterie 100 weist zumindest eine Batteriezelle 120 und ein Batteriegehäuse 110 auf, wobei die zumindest eine Batteriezelle 120 in dem Batteriegehäuse 110 angeordnet ist.

Das Batteriegehäuse 110 weist einen als Batteriegehäuseschale 1 ausgebildeten Unterbodenschutz 1 gemäß einer fünften Ausführungsform auf. Der Unterbodenschutz 1 weist eine Kunststofflage 11, zwei Schutzelemente 21, 22 und eine Schaumschicht 30 auf. Das Schutzelement 22 bildet zumindest teilweise die Innenfläche 2 des Unterbodenschutzes 1 und die Kunststofflage 11 ist sandwichartig zwischen den zwei Schutzelementen 21, 22 angeordnet. Die Schaumschicht 30 ist zumindest abschnittsweise mit dem Schutzelement 22, das zumindest teilweise die Innenfläche 2 des Unterbodenschutzes 1 bildet, verbunden.

Das Schutzelement 21 ist an einer Außenfläche 5 des Unterbodenschutzes 1 angeordnet und bildet zumindest teilweise eine Außenfläche 3 des Unterbodenschutzes 1.

Die Kunststofflage 11 kann stoffschlüssig mit dem Schutzelement 21 und/oder dem Schutzelement 22 verbunden sein.

### Bezugszeichenliste

- 1: Unterbodenschutz / Batteriegehäuseschale
- 2: Innenfläche (des Unterbodenschutzes)
- 3: Außenfläche (des Unterbodenschutzes)
- 4: Innenseite (des Unterbodenschutzes)
- 5: Außenseite (des Unterbodenschutzes)
- 6: Aufnahmevolumen (Aufnahmevolumen)
- 11: (erste) Kunststofflage
- 12: (zweite) Kunststofflage
- 21: (erstes) Schutzelement / Metallplatte / Organoblech
- 22: (zweites) Schutzelement / Metallplatte / Organoblech
- 30: Schaumschicht / Schaumlage / Schaummaterial
- 40: Rippe
- 50: Verbindungsflansch
- 100: Traktionsbatterie
- 110: Batteriegehäuse
- 111: Batteriegehäusedeckel
- 120: Batteriezelle

## Patentansprüche

1. Unterbodenschutz (1) für ein Kraftfahrzeug, aufweisend:
- zumindest eine Kunststofflage (11, 12);
- zumindest ein Schutzelement (21, 22); und
- zumindest eine Schaumschicht (30),
wobei
- das Schutzelement (21, 22) mit der Kunststofflage (11, 12) verbunden ist;
- die Schaumschicht (30) mit einer Innenfläche (2) des Unterbodenschutzes (1) verbunden ist;
- zumindest ein Schutzelement (21) an einer Außenseite (5) des Unterbodenschutzes (1) angeordnet ist und zumindest teilweise eine Außenfläche (3) des Unterbodenschutzes (1) bildet;
**dadurch gekennzeichnet, dass**
- die zumindest eine Kunststofflage (11) an einer Innenseite (4) des Unterbodenschutzes (1) angeordnet ist und zumindest teilweise die Innenfläche (2) des Unterbodenschutzes (1) bildet;
- die Schaumschicht (30) zumindest abschnittsweise mit der Kunststofflage (11) verbunden ist; und
- der Unterbodenschutz (1) zumindest zwei Rippen (40) aufweist, die in die Schaumschicht (30) ragen.

2. Unterbodenschutz (1) nach Anspruch 1, **gekennzeichnet durch** die folgenden Merkmale:
- der Unterbodenschutz (1) weist zumindest zwei Kunststofflagen (11, 12) auf, wobei eine der Kunststofflagen (11) zumindest teilweise die Innenfläche (2) des Unterbodenschutzes (1) bildet;
- das Schutzelement (21) ist sandwichartig zwischen den zwei Kunststofflagen (11, 12) angeordnet; und
- die Schaumschicht (30) ist zumindest abschnittsweise mit der Kunststofflage (11) verbunden, die zumindest teilweise die Innenfläche (2) des Unterbodenschutzes (1) bildet.

3. Unterbodenschutz (1) nach Anspruch 1 oder 2, **dadurch gekennzeichnet, dass** zumindest ein Teil der Rippen (40) monolithisch mit der Kunststofflage (11) ausgebildet sind, die an der Innenseite (4) des Unterbodenschutzes (1) angeordnet ist.

4. Unterbodenschutz (1) nach einem der vorhergehenden Ansprüche, **dadurch gekennzeichnet, dass** das zumindest eine Schutzelement (21, 22) als Metallplatte (21, 22) oder als Organoblech (21, 22) oder als Kunststoffelement (21, 22) ausgebildet ist.

5. Unterbodenschutz (1) nach einem der vorhergehenden Ansprüche, **dadurch gekennzeichnet, dass** der Unterbodenschutz (1) einen randseitig angeordneten Verbindungsflansch (50) aufweist.

6. Unterbodenschutz (1) nach einem der vorhergehenden Ansprüche, **dadurch gekennzeichnet, dass** zumindest ein Schutzelement (21, 22) mit zumindest einer Kunststofflage (11, 12) stoffschlüssig verbunden ist.

7. Unterbodenschutz (1) nach einem der vorhergehenden Ansprüche, **dadurch gekennzeichnet, dass** der Unterbodenschutz (1) schalenförmig ausgebildet ist und zumindest teilweise ein Aufnahmevolumen (6) begrenzt, das zur Aufnahme von Batteriezellen (120) und/oder Batteriemodulen ausgebildet ist.

8. Batteriegehäuse (110) zur Aufnahme von Batteriezellen (120) und/oder Batteriemodulen, aufweisend eine Batteriegehäuseschale (1), die als Unterbodenschutz (1) gemäß einem der Ansprüche 1 bis 7 ausgebildet ist.

9. Traktionsbatterie (100) für ein Kraftfahrzeug, aufweisend zumindest eine Batteriezelle (120) und/oder zumindest ein Batteriemodul und ein Batteriegehäuse (110) nach Anspruch 8, wobei die zumindest eine Batteriezelle (120) und/oder das zumindest eine Batteriemodul in dem Batteriegehäuse (110) angeordnet ist/sind.

10. Traktionsbatterie (100) nach Anspruch 9, **dadurch gekennzeichnet, dass** die zumindest eine Batteriezelle (120) und/oder das zumindest eine Batteriemodul auf der Schaumschicht (30) angeordnet ist/sind.

11. Kraftfahrzeug, insbesondere Elektrokraftfahrzeug
- mit einem Unterbodenschutz (1) nach einem der Ansprüche 1 bis 7, der an einem Unterboden des Kraftfahrzeugs, insbesondere an einer Traktionsbatterie des Kraftfahrzeugs befestigt ist, oder
- mit einer Traktionsbatterie (100) nach Anspruch 9 oder 10.

## Claims

1. An underbody protection means (1) for a motor vehicle, having:
- at least one plastic layer (11, 12);
- at least one protection element (21, 22); and
- at least one foam layer (30);
wherein
- the protection element (21, 22) is joined to the plastic layer (11, 12);
- the foam layer (30) is joined to an inner surface (2) of the underbody protection means (1);
- at least one protection element (21) is arranged on an outer side (5) of the underbody protection means (1) and at least partially forms an outer surface (3) of the underbody protection means (1);
**characterized in that**
- the at least one plastic layer (11) is arranged on an inner side (4) of the underbody protection means (1) and at least partially forms the inner surface (2) of the underbody protection means (1);
- the foam layer (30) is at least partially joined to the plastic layer (11); and
- the underbody protection means (1) has at least two ribs (40) which project into the foam layer (30).

2. The underbody protection means (1) according to claim 1, **characterized by** the following features:
- the underbody protection means (1) has at least two plastic layers (11, 12), one of the plastic layers (11) at least partially forming the inner surface (2) of the underbody protection means (1);
- the protection element (21) is sandwiched between the two plastic layers (11, 12); and
- the foam layer (30) is at least partially joined to the plastic layer (11), which at least partially forms the inner surface (2) of the underbody protection means (1).

3. The underbody protection means (1) according to claim 1 or 2, **characterized in that** at least some of the ribs (40) are formed monolithically with the plastic layer (11) which is arranged on the inside (4) of the underbody protection means (1).

4. The underbody protection means (1) according to any of the preceding claims, **characterized in that** the at least one protection element (21, 22) is designed as a metal plate (21, 22) or as an organic sheet (21, 22) or as a plastic element (21, 22).

5. The underbody protection means (1) according to any of the preceding claims, **characterized in that** the underbody protection means (1) has a connecting flange (50) arranged on the edge.

6. The underbody protection means (1) according to any of the preceding claims, **characterized in that** at least one protection element (21, 22) is joined to at least one plastic layer (11, 12) in a materially locking manner.

7. The underbody protection means (1) according to any of the preceding claims, **characterized in that** the underbody protection means (1) is shell-shaped and at least partially delimits a receiving volume (6) which is designed to receive battery cells (120) and/or battery modules.

8. A battery housing (110) for accommodating battery cells (120) and/or battery modules, having a battery housing shell (1) which is designed as underbody protection means (1) according to any of claims 1 to 7.

9. A traction battery (100) for a motor vehicle, having at least one battery cell (120) and/or at least one battery module and a battery housing (110) according to claim 8, wherein the at least one battery cell (120) and/or the at least one battery module is/are arranged in the battery housing (110).

10. The traction battery (100) according to claim 9, **characterized in that** the at least one battery cell (120) and/or the at least one battery module is/are arranged on the foam layer (30).

11. A motor vehicle, in particular an electric vehicle
- having an underbody protection means (1) according to any of claims 1 to 7, which is attached to an underbody of the motor vehicle, in particular to a traction battery of the motor vehicle, or
- having a traction battery (100) according to claim 9 or 10.

## Revendications

1. Protection de bas de caisse (1) pour un véhicule automobile, présentant :
- au moins une couche de matière plastique (11, 12) ;
- au moins un élément de protection (21, 22) ; et
- au moins une couche de mousse (30),
dans laquelle
- l'élément de protection (21, 22) est relié à la couche de matière plastique (11, 12) ;
- la couche de mousse (30) est reliée à une surface intérieure (2) de la protection de bas de caisse (1) ;
- au moins un élément de protection (21) est disposé sur un côté extérieur (5) de la protection de bas de caisse (1) et forme au moins partiellement une surface extérieure (3) de la protection de bas de caisse (1) ;
**caractérisée en ce que**
- l'au moins une couche de matière plastique (11) est disposée sur un côté intérieur (4) de la protection de bas de caisse (1) et forme au moins partiellement la surface intérieure (2) de la protection de bas de caisse (1) ;
- la couche de mousse (30) est reliée au moins dans certaines sections à la couche de matière plastique (11) ; et
- la protection de bas de caisse (1) présente au moins deux nervures (40) qui font saillie dans la couche de mousse (30).

2. Protection de bas de caisse (1) selon la revendication 1, **caractérisée par** les caractéristiques suivantes :
- la protection de bas de caisse (1) présente au moins deux couches de matière plastique (11, 12), dans laquelle l'une des couches de matière plastique (11) forme au moins partiellement la surface intérieure (2) de la protection de bas de caisse (1) ;
- l'élément de protection (21) est disposé en sandwich entre les deux couches de matière plastique (11, 12) ; et
- la couche de mousse (30) est reliée au moins dans certaines sections à la couche de matière plastique (11) qui forme au moins partiellement la surface intérieure (2) de la protection de bas de caisse (1).

3. Protection de bas de caisse (1) selon la revendication 1 ou 2,
**caractérisée en ce qu'au** moins une partie des nervures (40) sont réalisées de manière monolithique avec la couche de matière plastique (11) qui est disposée sur le côté intérieur (4) de la protection de bas de caisse (1).

4. Protection de bas de caisse (1) selon l'une des revendications précédentes, **caractérisée en ce que** l'au moins un élément de protection (21, 22) est réalisé sous forme de plaque métallique (21, 22) ou de tôle organique (21, 22) ou d'élément en matière plastique (21, 22).

5. Protection de bas de caisse (1) selon l'une des revendications précédentes, **caractérisée en ce que** la protection de bas de caisse (1) présente une bride de liaison (50) disposée côté bord.

6. Protection de bas de caisse (1) selon l'une des revendications précédentes, **caractérisée en ce que** l'élément de protection (21, 22) est relié à au moins une couche de matière plastique (11, 12) par liaison de matière.

7. Protection de bas de caisse (1) selon l'une des revendications précédentes,
**caractérisée en ce que** la protection de bas de caisse (1) est réalisée sous forme de coque et délimite au moins partiellement un volume de réception (6) qui est réalisé pour recevoir des éléments de batterie (120) et/ou des modules de batterie.

8. Boîtier de batterie (110) destiné à recevoir des éléments de batterie (120) et/ou des modules de batterie, présentant une coque de boîtier de batterie (1) qui est réalisée en tant que protection de bas de caisse (1) selon l'une des revendications 1 à 7.

9. Batterie de traction (100) pour un véhicule automobile, présentant au moins un élément de batterie (120) et/ou au moins un module de batterie et un boîtier de batterie (110) selon la revendication 8, dans laquelle l'au moins un élément de batterie (120) et/ou l'au moins un module de batterie sont disposés dans le boîtier de batterie (110).

10. Batterie de traction (100) selon la revendication 9,
**caractérisée en ce que** l'au moins un élément de batterie (120) et/ou l'au moins un module de batterie sont disposés sur la couche de mousse (30).

11. Véhicule automobile, en particulier véhicule automobile électrique
- comportant une protection de bas de caisse (1) selon l'une des revendications 1 à 7 qui est fixée à un bas de caisse du véhicule automobile, en particulier à une batterie de traction du véhicule automobile, ou
- comportant une batterie de traction (100) selon la revendication 9 ou 10.
